(19) **Europäisches Patentamt European Patent Office Office européen des brevets**

(11) **EP 3 462 629 B1**

(12) **FASCICULE DE BREVET EUROPEEN**

(45) Date de publication et mention de la délivrance du brevet:
**20.11.2019 Bulletin 2019/47**

(51) Int Cl.:
*H04B 3/23* *(2006.01)*          *H04B 1/12* *(2006.01)*
*H04B 15/04* *(2006.01)*         *H04L 5/14* *(2006.01)*

(21) Numéro de dépôt: **18193743.4**

(22) Date de dépôt: **11.09.2018**

(54) **DISPOSITIF ET PROCEDE DE RÉDUCTION DU SIGNAL D'AUTO-INTERFERENCE DANS UN SYSTEME DE COMMUNICATION BIDIRECTIONNEL SIMULTANE**

VORRICHTUNG UND VERFAHREN ZUR REDUZIERUNG DES AUTO-INTERFERENZ-SIGNALS EINES BIDIREKTIONALEN SIMULTANEN KOMMUNIKATIONSSYSTEMS

DEVICE AND METHOD FOR REDUCING THE AUTO-INTERFERENCE SIGNAL IN A SIMULTANEOUS BI-DIRECTIONAL COMMUNICATION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.09.2017 FR 1758937**

(43) Date de publication de la demande:
**03.04.2019 Bulletin 2019/14**

(73) Titulaire: **Commissariat à l'Energie Atomique et aux Energies Alternatives 75015 Paris (FR)**

(72) Inventeurs:
• **GRAVE, Baptiste 69003 LYON (FR)**
• **GIRY, Alexandre 38000 GRENOBLE (FR)**

(74) Mandataire: **Priori, Enrico Marks & Clerk France Immeuble "Visium" 22, avenue Aristide Briand 94117 Arcueil Cedex (FR)**

(56) Documents cités:
**EP-A1- 3 151 495     US-A1- 2015 318 976**

**Description**

L'invention porte sur un dispositif et sur un procédé de réduction du signal d'auto-interférence présent dans un signal de réception d'un système de communication bidirectionnel simultané également appelé « full-duplex » dans la terminologie anglo-saxonne.

Les réseaux de communications doivent aujourd'hui fournir un débit de données de plus en plus important, avec un spectre de fréquences de plus en plus encombré. Les procédés classiques de télécommunications reposent sur une technologie dite bidirectionnelle à l'alternat, également appelée « Half Duplex » dans la terminologie anglo-saxonne, dans laquelle l'émetteur et le récepteur communiquent à tour de rôle (Time Division Duplexing) ou sur des bandes de fréquences différentes (Frequency Division Duplexing).

La technologie dite bidirectionnelle simultanée dans la même bande, également appelée « In Band Full Duplex » (IBFD) dans la terminologie anglo-saxonne, repose sur le principe d'émission et de réception en même temps et sur la même bande de fréquence, ce qui permet théoriquement de réduire l'occupation spectrale du signal de communication par un facteur deux.

Toutefois, l'enjeu principal de la technologie « In Band Full Duplex » réside dans la réduction du signal d'auto-interférence (« Self-interference cancellation ») qui résulte de l'interférence entre la voie d'émission et la voie de réception. L'environnement peut également avoir une influence sur le nombre et la puissance des interférences, par exemple en cas de réflexion du signal d'émission sur une paroi Dans le cadre d'une communication WiFi, les signaux étant émis à une puissance moyenne de 20 dBm (100 mW), et le seuil de réception étant d'environ -90 dBm (1 pW), l'auto-interférence devrait être réduite de 110 dBm.

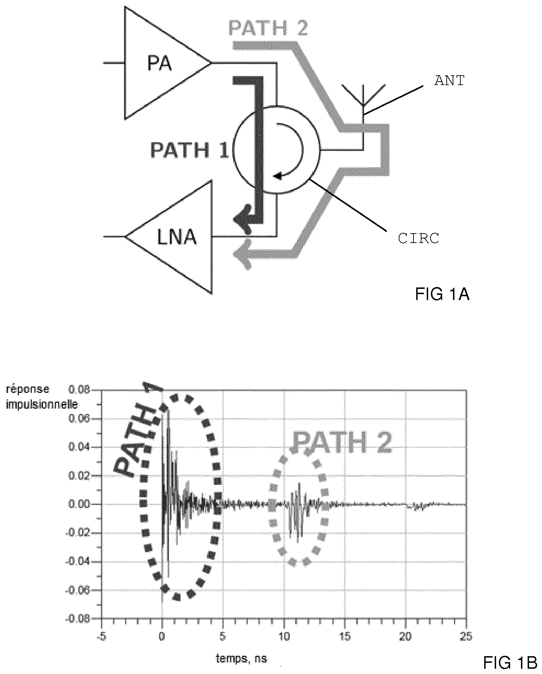

Dans un système à deux antennes, une fonctionnant en émission pendant que l'autre fonctionne simultanément en réception, l'isolation naturelle entre les deux antennes peut être de l'ordre de 30 dB, ce qui est insuffisant. La figure 1A illustre schématiquement un système full-duplex à une seule antenne, comprenant une antenne ANT d'émission et de réception de signaux, un circulateur CIRC configuré pour isoler le chemin d'émission du chemin de réception, un amplificateur de puissance PA configuré pour amplifier les signaux d'émission, et un amplificateur faible bruit LNA configuré pour amplifier les signaux très faibles de réception issus de l'antenne ANT. Dans cette configuration, l'isolation entre les voies d'entrée et de sortie peut être de l'ordre de 20 dB, ce qui est également insuffisant. Le circulateur CIRC laisse en effet passer un signal de « fuite » (figures 1A et 1B, PATH1), qui correspond à une première contribution d'un signal d'auto-interférence à réduire. D'autres contributions doivent pouvoir être réduites, comme par exemple le signal d'émission réfléchi par l'antenne en direction de la voie de réception, en raison d'une mauvaise adaptation de l'antenne (figures 1A et 1B, PATH2).

Dans la suite de la description, on appellera « interface d'antenne » l'ensemble comprenant au moins une antenne et éventuellement au moins un bloc d'interface, qui peut être par exemple, de façon non limitative, un isolateur ou un circulateur.

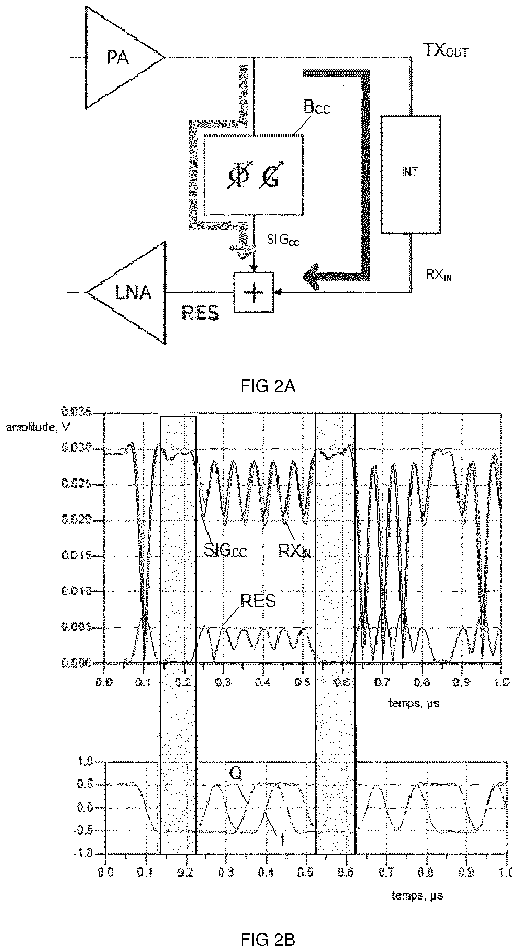

Pour annuler ces contributions d'auto-interférence, il est bien connu (figure 2A) d'utiliser un module de réduction de signal $B_{CC}$ apte à prélever une réplique du signal d'émission $TX_{OUT}$ et de lui appliquer un délai (correspondant notamment au passage du signal d'émission par l'interface d'antenne INT) et une atténuation. Ce signal corrigé $SIG_{CC}$ est appelé « premier signal de réduction ». Le signal de différence RES entre d'une part le signal reçu par l'interface d'antenne $RX_{IN}$ et d'autre part le premier signal de réduction $SIG_{CC}$, permet alors de traiter sur la voie de réception uniquement le signal reçu ayant une contribution d'auto-interférence suffisamment réduite. Dans la pratique, la phase et l'amplitude du premier signal de réduction sont déterminées par le module de réduction de signal pour générer une interférence destructive avec le signal reçu par l'interface d'antenne INT (amplitude identique des deux signaux en opposition de phase), et ainsi annuler la contribution d'auto-interférence dans le signal reçu par l'interface d'antenne.

La figure 2B illustre un résultat de simulation du système illustré par la figure 2A, utilisant un signal à modulation à simple porteuse QPSK, avec un débit de 20MSps, et les signaux I et Q correspondants. Prenons le cas de figure où l'enveloppe du signal d'émission est à peu près constante (par exemple entre 0,15 μs et 0,20 μs sur la figure 2B). Le premier module de réduction $B_{CC}$ prélève à un instant t une réplique du signal d'émission $TX_{OUT}$, et aligne la phase de la réplique du signal d'émission $TX_{OUT}$ sur le signal reçu par l'interface d'antenne $RX_{IN}$ à un instant t+δt, en fonction des paramètres de gain complexe définis lors d'une étape d'étalonnage. Même si le signal reçu par l'interface d'antenne $RX_{IN}$ est reçu à un délai Δt très supérieur à δt, l'enveloppe du signal d'émission $TX_{OUT}$ ne change pas entre t et Δt, ainsi le signal de différence RES est bien nul, et la contribution d'auto-interférence bien effacée.

Prenons le cas maintenant d'une variation de l'enveloppe du signal d'émission (par exemple entre 0,05 μs et 0,15 μs sur la figure 2B). Le premier module de réduction $B_{CC}$ prélève à un instant t une réplique du signal d'émission $TX_{OUT}$, et aligne, avec un déphasage de 180°, la phase de la réplique du signal d'émission $TX_{OUT}$ sur le signal reçu par l'interface d'antenne $RX_{IN}$ à un instant t+δt, en fonction des paramètres de gain complexe définis lors d'une étape d'étalonnage. Etant donné que l'enveloppe du signal d'émission $TX_{OUT}$ change entre t et Δt, le signal de différence RES est non nul, et la contribution d'auto-interférence n'est pas effacée.

En utilisant différentes lignes à retard à la place de déphaseurs, il serait possible d'effacer convenablement les différentes contributions d'auto-interférence. Il est ainsi connu de l'état de la technique le document US 2013/0301488 ainsi que l'article « Full Duplex Radios» (Bharadia, McMilin; et Katti, conférence ACM SIGCOMM'13, Hong-Kong, août 2013, également disponible sous le lien http://www.stanford.edu ?skatti/pubs sigcomm13-fullduplex.pdf), qui décrivent un dispositif de réduction du signal d'auto-interférence présent dans un signal de réception d'un système full-duplex transmettant un signal d'émission. Le dispositif comprend un moyen de génération d'un signal de différence entre d'une part le signal de réception et d'autre part un premier signal de réduction généré par un premier module de réduction de signal apte à appliquer des retards variables et des atténuations variables au signal d'émission. Ce dispositif permet ainsi d'appliquer différents retards avec des atténuateurs propres à chaque ligne à retard, ce qui empêche l'apparition de résidus en cas de variation de l'amplitude de l'enveloppe. Toutefois, cette solution n'est pas satisfaisante, car les différentes lignes à retard utilisées pour appliquer les retards variables occupent une surface de silicium importante, incompatible avec le développement d'objets de communication de petite taille et à faible coût tels que les terminaux mobiles

Il est également connu de l'état de la technique le document « A 1.7-to-2.2 GHz Full-Duplex Transceiver System with >50 dB Self-Interference Cancellation over 42 MHz Bandwidth » (Zhang et al., ISSC 2017), qui décrit un dispositif de réduction du signal d'auto-interférence présent dans un signal de réception d'un système full-duplex. Ce document propose d'utiliser un premier module de réduction du signal radio reçu (« Wideband Cancellation SIC1 »), fonctionnant sur la porteuse d'émission $LO_2$, et un deuxième module de réduction de signal, cette fois-ci en bande de base, du résidu issu du premier module (« Wideband Cancellation SIC2 »), et fonctionnant sur la porteuse de réception $LO_1$. Cette solution n'est pas non plus satisfaisante, car elle utilise une synchronisation d'horloge entre les porteuses d'émission et de réception, alors-même que le full-duplex ne requiert pas de synchronisation d'horloge entre l'émission et la réception.

D'autres systèmes de l'état de la technique sont divulgué par la demande de brevet US 2015/318976 et EP 3151495.

L'invention vise donc à effacer les contributions résiduelles d'auto-interférence dans un signal de réception en full-duplex, notamment en cas de variation du signal d'enveloppe pour des signaux à simple porteuse (par exemple en modulation QPSK) ou à porteuses multiples (par exemple en modulation OFDM), avec un dispositif présentant un encombrement minimal, et ne nécessitant pas de synchronisation d'horloge entre l'émission et la réception.

Un objet de l'invention permettant d'atteindre ce but est donc un dispositif de réduction d'au moins une contribution d'auto-interférence dans un système de communication sans fil full-duplex configuré pour transmettre un signal d'émission à une porteuse d'émission et modulé par un signal en bande de base, et configuré pour recevoir un signal de réception contenant au moins une contribution d'auto-interférence correspondant au signal d'émission, ledit dispositif de réduction comprenant au moins un premier module de réduction, configuré pour prélever une réplique du signal d'émission, et configuré pour générer un premier signal de réduction, le dispositif comprenant en outre :

- un deuxième module de réduction, disposé de façon à pouvoir prélever une réplique du signal en bande de base, et apte à générer un deuxième signal de réduction fonction de la dérivée temporelle du signal en bande de base,
- un soustracteur, relié au premier module de réduction et au deuxième module de réduction, et configuré pour soustraire du signal de réception le premier signal de réduction et le deuxième signal de réduction.

Avantageusement, le dispositif est configuré pour fournir au deuxième module de réduction une dérivée temporelle de la réplique du signal en bande de base mélangée à la porteuse d'émission.

Avantageusement le dispositif est configuré pour appliquer un retard numérique à la réplique du signal en bande de base avant que ladite réplique ne soit fournie au deuxième module de réduction.

Avantageusement le premier module de réduction est configuré pour appliquer un premier gain complexe à une réplique du signal d'émission en vue de fournir le premier signal de réduction, le premier gain complexe étant déterminé de manière à générer une interférence destructive entre la contribution d'auto-interférence comprise dans le signal de réception et le premier signal de réduction.

Avantageusement, le deuxième module de réduction est configuré pour appliquer un deuxième gain complexe à la dérivée temporelle de la réplique du signal en bande de base mélangée à la porteuse d'émission, le deuxième gain complexe étant déterminé de manière à générer une interférence destructive entre d'une part un résidu de l'interférence destructive entre la contribution d'auto-interférence comprise dans le signal de réception et le premier signal de réduction, et d'autre part le deuxième signal de réduction.

Un autre objet de l'invention est un dispositif de communication, comprenant une pluralité de nœuds de communication, au moins un des nœuds de communication étant équipé d'un dispositif de réduction d'au moins une contribution d'auto-interférence précité, et d'un dispositif de réduction des interférences générées par les autres nœuds de communication.

Un autre objet de l'invention est un procédé de réduction d'au moins une contribution d'auto-interférence dans un système de communication sans fil full-duplex, configuré pour transmettre un signal d'émission à une porteuse d'émission et modulé par un signal en bande de base, et configuré pour recevoir un signal de réception contenant au moins une contribution d'auto-interférence correspondant au signal d'émission, ledit procédé de réduction comprenant au moins une première étape de réduction, dans laquelle un premier module de réduction prélève une réplique du signal d'émission et génère un premier signal de réduction, le procédé comprenant en outre au moins les étapes suivantes :

- une deuxième étape de réduction, dans laquelle un deuxième module de réduction génère un deuxième signal de réduction fonction de la dérivée temporelle de la réplique du signal en bande de base,
- une étape de soustraction dans laquelle on soustrait du signal de réception le premier signal de réduction et le deuxième signal de réduction.

Avantageusement, une dérivée temporelle de ladite réplique du signal en bande de base mélangée à la porteuse d'émission est fournie au deuxième module de réduction.

Avantageusement, un retard numérique est appliqué à ladite réplique du signal en bande de base avant que ladite réplique ne soit fournie au deuxième module de réduction.

Avantageusement, le premier module de réduction applique un premier gain complexe à une réplique du signal d'émission en vue de fournir le premier signal de réduction, le premier gain complexe étant déterminé de manière à générer une interférence destructive entre la contribution d'auto-interférence comprise dans le signal de réception et le premier signal de réduction.

Avantageusement le deuxième module de réduction applique un deuxième gain complexe à la dérivée temporelle de la réplique du signal en bande de base mélangée à la porteuse d'émission, le deuxième gain complexe étant déterminé de manière à générer une interférence destructive entre d'une part un résidu de l'interférence destructive entre la au moins contribution d'auto-interférence comprise dans le signal de réception et le premier signal de réduction, et d'autre part le deuxième signal de réduction.

Avantageusement, le procédé comprend en outre une étape d'étalonnage, ladite étape d'étalonnage comprenant les sous-étapes suivantes :

- Une première sous-étape de détermination du premier gain complexe du premier module de réduction, qui minimise la différence entre la contribution d'auto-interférence comprise dans le signal de réception et correspondant au signal d'émission, et le premier signal de réduction, dit signal de résidu ; puis
- Une deuxième sous-étape de détermination du deuxième gain complexe du deuxième module de réduction qui minimise la différence entre le signal de résidu et le deuxième signal de réduction.

Avantageusement, le procédé comprend en outre une sous-étape de détermination du retard numérique minimisant la différence entre le signal de résidu et le deuxième signal de réduction.

Selon une variante, ladite sous-étape de détermination du deuxième gain complexe comprend en outre la détermination du retard numérique minimisant la différence entre le signal de résidu et le deuxième signal de réduction.

Avantageusement, ladite étape d'étalonnage est effectuée périodiquement ou en cas de changement de l'environnement du système de communication sans fil full-duplex.

D'autres caractéristiques, détails et avantages de l'invention ressortiront à la lecture de la description faite en référence aux dessins annexés donnés à titre d'exemple et qui représentent, respectivement :

- figure 1A : un système full-duplex à une seule antenne de l'état de l'art (déjà décrite) ;
- figure 1B : la réponse impulsionnelle illustrant les deux trajets d'auto-interférence de la figure 1A (déjà décrite) ;
- figure 2A : un schéma de l'état de l'art de réduction d'auto-interférence (déjà décrite) ;
- figure 2B : une simulation des trajets représentés sur la figure 2A (déjà décrite) ;
- figure 3 : une architecture du dispositif de réduction selon l'invention ;
- figure 4 : une illustration schématique du procédé selon l'invention ;

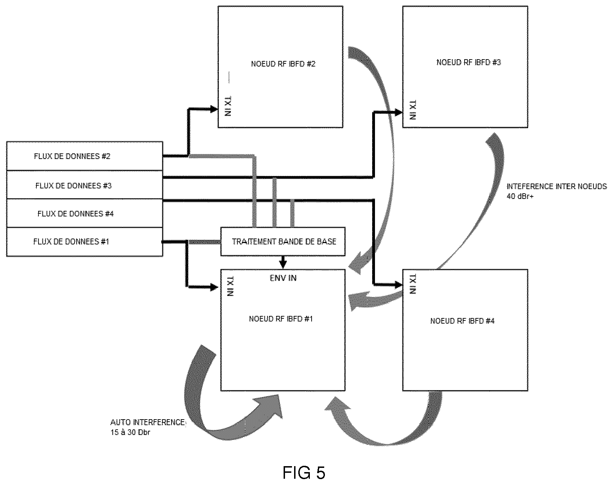

- figure 5 : une adaptation du dispositif de réduction selon l'invention aux communications de type MIMO.

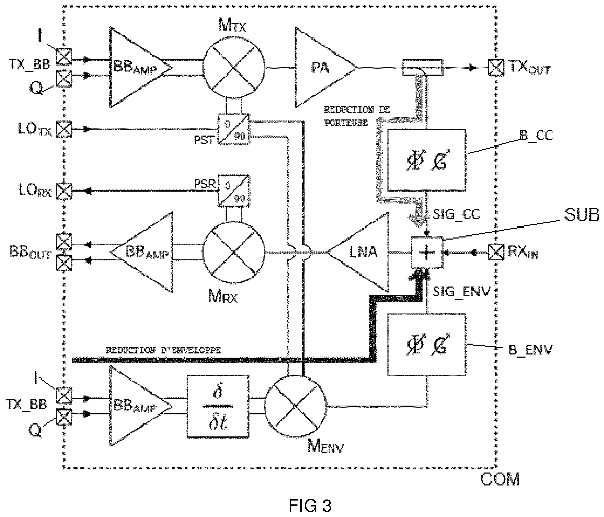

Considérons la figure 3, qui illustre schématiquement une architecture du dispositif de réduction selon l'invention, d'un dispositif de communication COM. Un signal d'émission en bande de base $TX_{BB}$ comprend une composante I (composante en phase) et une composante Q (composante en quadrature), qui peuvent être amplifiées par un amplificateur en bande de base $BB_{AMP}$. Un exemple de signaux des composantes I et Q se trouve au bas de la figure 2B. Dans le cas d'une modulation à simple porteuse QPSK, chaque composante I et Q peut prendre deux états. La composante I est mélangée par un mélangeur $M_{TX}$ à un signal de porteuse d'émission $LO_{TX}$, et la composante Q est mélangée par le mélangeur $M_{TX}$ au même signal de porteuse d'émission $LO_{TX}$ déphasé de 90° par le module de déphasage PST. La somme de ces deux signaux mélangés est ensuite amplifiée par un amplificateur PA, et le signal amplifié, désigné $TX_{OUT}$, est envoyé vers une interface d'antenne (non représentée). Le signal de réception $RX_{IN}$ contient une contribution d'auto-interférence correspondant au signal d'émission $TX_{OUT}$, que le dispositif selon l'invention vise à effacer. La réduction de la contribution d'auto-interférence vise à envoyer vers l'amplificateur faible bruit LNA uniquement le signal de réception « utile », à savoir débarrassé de toute contribution d'auto-interférence, pour ensuite être démodulé dans une chaîne de réception connue de l'homme du métier, comprenant notamment un mélangeur $M_{RX}$ et un module de déphasage PSR, et avoir au final un signal de réception en bande de base $BB_{OUT}$. Il est à noter que les modules de déphasage PST et PSR ne sont pas nécessaires pour toutes les modulations, notamment pour les modulations non complexes (par exemple la modulation simple porteuse BPSK).

Une réplique du signal d'émission $TX_{OUT}$ est prélevée et est amenée dans un premier module de réduction $B_{CC}$. Le premier module de réduction $B_{CC}$ applique un gain complexe $G_{CC}^*$ au signal d'émission $TX_{OUT}$, en vue de fournir un premier signal de réduction $SIG_{CC}$. Le gain complexe $G_{CC}^*$ du premier module de réduction $B_{CC}$ et appliqué au signal d'émission $TX_{OUT}$ peut être déterminé périodiquement, et/ou en fonction du changement d'environnement, lors d'une étape dite d'étalonnage, décrite ultérieurement.

Le soustracteur SUB soustrait le premier signal de réduction $SIG_{CC}$ du signal de réception $RX_{IN}$. La soustraction des deux signaux est en réalité une addition des signaux par interférence destructive, le gain complexe $G_{CC}^*$ du premier module de réduction $B_{CC}$ étant sélectionné pour que le premier signal de réduction $SIG_{CC}$ soit en opposition de phase par rapport au signal de réception $RX_{IN}$, à amplitude identique.

Comme il a été mentionné précédemment, en cas de variation de l'enveloppe du signal d'émission $TX_{OUT}$, la réduction de la contribution d'auto-interférence n'est pas parfaite, laissant apparaître un signal résiduel RES. La génération d'un deuxième signal de réduction $SIG_{ENV}$, correspondant au signal résiduel RES, permettrait alors, en soustrayant le deuxième signal de réduction $SIG_{ENV}$ du signal résiduel RES, de récupérer uniquement le signal de réception utile, débarrassé de toute contribution d'auto-interférence.

Considérons que le signal d'émission puisse être écrit sous la forme :

$$x(t) = A(t).e^{j\omega_c t}$$

où $A(t)$ désigne l'enveloppe du signal en bande de base $TX_{BB}$, et où $\omega_C$ désigne la pulsation de la porteuse d'émission $LO_{TX}$.

Le signal de réception $RX_{IN}$ comprenant la contribution d'auto-interférence correspond au signal d'émission $TX_{OUT}$, avec toutefois un gain réel $G_{INT}$ représentant l'atténuation introduite par le passage par l'interface d'antenne, et un retard $t_{INT}$ correspondant notamment aux trajets dans l'interface d'antenne (voir figure 1A).

Le signal de réception $RX_{IN}$ peut donc s'écrire :

$$RX_{IN}(t) = G_{INT}.A(t - t_{INT}).e^{j\omega_c(t-t_{INT})}$$

Le retard correspondant au passage par l'interface d'antenne peut être décomposé en un multiple de la période de la porteuse plus un retard résiduel inférieur à cette période. L'enveloppe varie lentement par rapport à la porteuse, il est donc possible d'approcher le retard total par le multiple de la période de la porteuse, le résidu pouvant être vu comme un terme de phase. Le signal de réception $RX_{IN}$ peut donc s'écrire :

$$RX_{IN}(t) = G_{INT}.A(t - t_{INT}).e^{j\omega_c t + \varphi_{INT}}$$

De la même manière, le premier signal de réduction $SIG_{CC}$ issu du premier module de réduction $B_{CC}$, peut s'écrire :

$$SIG_{CC}(t) = G_{CC}.A(t - t_{CC}).e^{j\omega_c(t-t_{cc})}$$

où $G_{CC}$ désigne le module du gain complexe appliqué à la réplique du signal d'émission $TX_{OUT}$, et tcc désigne le retard, correspondant à un déphasage.

En considérant le retard appliqué par le premier module de réduction $B_{CC}$ comme étant un déphasage, le signal de réception $SIG_{CC}$ peut donc s'écrire :

$$SIG_{CC}(t) = G_{CC}.A(t - t_{CC}).e^{j\omega_c t + \varphi_{cc}}$$

Le signal résiduel RES est la différence entre le signal de réception $RX_{IN}$ et le premier signal de réduction $SIG_{CC}$ :

$$RES = RX_{IN} - SIG_{CC}$$

$$RES = \mathrm{G_{INT}}.A(t - t_{INT}).e^{j\omega_c t + \varphi_{INT}} - \mathrm{G_{CC}}.A(t - t_{CC}).e^{j\omega_c t + \varphi_{cc}}$$

La phase $\varphi_{CC}$ et le gain $G_{CC}$ étant alignés respectivement sur la phase $\varphi_{INT}$ et le gain $G_{INT}$ de l'interface d'antenne, lors d'une étape d'étalonnage de la phase et du gain, le résidu peut s'écrire en fonction d'une phase alignée $\varphi$ et d'un gain aligné G :

$$RES = \mathrm{G}.[A(t - t_{INT}) - A(t - t_{CC})].e^{j\omega_c t + \varphi}$$

Le signal d'enveloppe $A(t)$ peut être assimilé, sur de courts intervalles à une fonction linéaire, comme l'illustrent les changements d'enveloppe à la figure 2B. Ainsi, $A(t)$ peut être écrit :

$$A(t) = \alpha.\mathrm{t} + \beta$$

où $\alpha$ et $\beta$ désignent les paramètres d'une fonction linéaire.
Dès lors, le résidu peut s'écrire :

$$RES = \mathrm{G}.[(\alpha.t - \alpha.t_{INT}) - (\alpha.t - \alpha.t_{CC})].e^{j\omega_c t + \varphi}$$

$$RES = \mathrm{G}.\alpha.(t_{CC} - t_{INT}).e^{j\omega_c t + \varphi}$$

$RES = G.A'(t_{CC} - t_{INT}).e^{j\omega_c t + \varphi}$, où A'(t) désigne la dérivée temporelle de A(t).
En d'autres termes, les inventeurs ont établi que le résidu peut être vu comme étant le signal de porteuse modulé par la dérivée temporelle du signal d'entrée en bande de base. Ainsi, en soustrayant au signal de résidu RES le signal d'émission en bande de base, dérivé et retardé, et auquel on applique un gain complexe $G_{ENV}{}^*$ dont les paramètres sont définis lors d'une étape d'étalonnage, il est possible de récupérer dans la chaîne de réception le signal de réception utile, débarrassé de toute contribution d'auto-interférence.
Le retard à appliquer à la dérivée du signal d'enveloppe correspond à $t_{INT}$-$t_{CC}$. Ce retard peut être appliqué au signal déjà dérivé, mais cela nécessiterait d'appliquer un retard conséquent en analogique, avec des lignes à retard encombrantes. Une solution privilégiée consiste à appliquer un retard numérique au signal d'enveloppe, le retard numérique pouvant être généré très simplement, à l'aide par exemple d'une mémoire numérique, puis de dériver ce signal déjà retardé.
Afin de dériver le signal d'enveloppe, en référence à la figure 3, une dérivée temporelle ($\delta/\delta t$), effectuée par exemple à l'aide d'un circuit dérivateur, est appliquée à une réplique des composantes I et Q du signal d'émission en bande de base $TX_{BB}$, avant que ces répliques ne soient mélangées, à l'aide d'un mélangeur $M_{ENV}$, à la même porteuse que le signal d'émission $TX_{OUT}$. L'utilisation de la même porteuse permet au deuxième signal de réduction $SIG_{ENV}$ d'être entièrement synchronisé sur le signal d'émission $TX_{OUT}$.

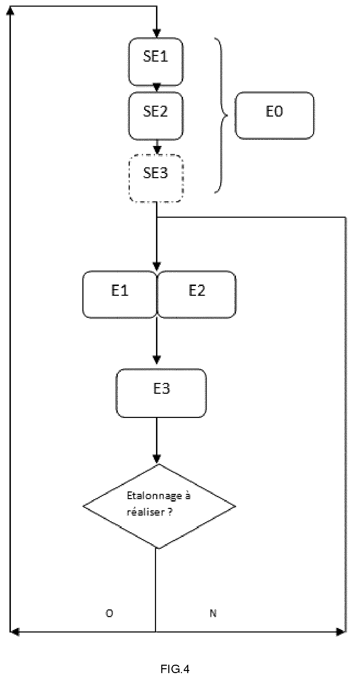

La figure 4 illustre un procédé de réduction mis en œuvre par un circuit du type de la fig. 3. Il comprend une première étape de réduction E1, conjointe à une deuxième étape de réduction E2, puis une étape de soustraction E3 des signaux issus de la première étape de réduction E1 et de la deuxième étape de réduction E2. De façon périodique, ou en cas de changement de l'environnement du système de communication full-duplex, une étape d'étalonnage E0 est effectuée, en vue de paramétrer correctement le premier module de réduction $B_{CC}$ et le deuxième module de réduction $B_{ENV}$.
L'étalonnage permet au dispositif de réduction de tenir compte de son environnement, et de suivre les modifications de l'environnement, par exemple les sources de réflexion, susceptibles de générer plusieurs contributions d'auto-interférence. L'étalonnage consiste à sélectionner un gain complexe, à savoir un gain en amplitude et un déphasage, qu'appliqueront le premier module de réduction $B_{CC}$ et le deuxième module de réduction $B_{ENV}$ avec des paramètres constants entre deux procédures d'étalonnage.
L'étape d'étalonnage E0 se fait en au moins deux sous-étapes distinctes. La première sous-étape SE1 consiste dans un premier temps à déterminer les paramètres de gain et de phase du premier module de réduction $B_{CC}$, en émettant un signal d'émission $TX_{OUT}$ donné. La détermination des paramètres de gain et de phase peut être effectuée par exemple en faisant varier pas à pas chacun des deux paramètres et en sélectionnant le couple de paramètres qui minimise une puissance d'un signal de différence entre le signal de réception $RX_{IN}$ et le premier signal de réduction $SIG_{CC}$, ladite puissance pouvant être mesurée à l'aide d'un détecteur de puissance disposé dans la chaîne de réception.

Une fois que ces paramètres du premier module de réduction $B_{CC}$ sont identifiés, la deuxième sous-étape SE2 consiste à déterminer les paramètres de gain complexe $G_{ENV}^*$ du deuxième module de réduction $B_{ENV}$, ainsi que le retard numérique à appliquer à la réplique du signal d'émission en bande de base $TX_{BB}$ avant de la dériver. De façon similaire à la détermination des paramètres du gain complexe $G_{CC}^*$, la détermination des paramètres du gain complexe $G_{ENV}^*$ peut être effectuée par exemple en faisant varier pas à pas chacun des deux paramètres de gain et de phase et en sélectionnant le couple de paramètres qui minimise une puissance en sortie du soustracteur. Durant cette deuxième sous-étape SE2, un retard numérique optimal est déterminé, en vue de minimiser, comme lors des sous-étapes SE1 et SE2, la puissance de sortie du soustracteur SUB. En alternative, le retard numérique optimal peut être déterminé durant une sous-étape SE3, distincte de la sous-étape SE2, ce qui a notamment pour avantage de pouvoir séparer, lors de la simulation du procédé selon l'invention, l'observation de l'optimisation des paramètres du gain complexe $G_{ENV}^*$ et du retard numérique.

La présente invention a été présentée dans le cas d'un système à une seule interface antenne INT. Elle pourrait être appliquée également aux systèmes multi-antennes de type « MIMO » (Multiple Input Multiple Output, ou en français Entrées Multiples Sorties Multiples). La figure 6 illustre une adaptation aux communications MIMO du dispositif de réduction selon l'invention. Dans le cadre des communications MIMO en full duplex, chaque antenne aurait alors deux niveaux d'interférences à distinguer, à savoir sa propre contribution d'auto-interférence, et les interférences issues des autres antennes du système MIMO, dont le niveau est plus faible. Ces deux types d'interférences pourraient être traités par le procédé de réduction selon l'invention.

La description ne fait référence qu'à une seule contribution d'auto-interférence à effacer. Toutefois, comme le traitement est linéaire, il peut être généralisé à la réduction de plusieurs contributions d'auto-interférence.

**Revendications**

1. Dispositif de réduction d'au moins une contribution d'auto-interférence dans un système de communication sans fil full-duplex configuré pour transmettre un signal d'émission ($TX_{OUT}$) à une porteuse d'émission ($LO_{TX}$) et modulé par un signal en bande de base ($TX_{BB}$), et configuré pour recevoir un signal de réception ($RX_{IN}$) contenant au moins une contribution d'auto-interférence correspondant au signal d'émission ($TX_{OUT}$), ledit dispositif de réduction comprenant au moins un premier module de réduction ($B_{CC}$), configuré pour prélever une réplique du signal d'émission ($TX_{OUT}$), et configuré pour générer un premier signal de réduction ($SIG_{CC}$), **caractérisé en ce qu'**il comprend en outre :

   - un deuxième module de réduction ($B_{ENV}$), disposé de façon à pouvoir prélever une réplique du signal en bande de base ($TX_{BB}$), et apte à générer un deuxième signal de réduction ($SIG_{ENV}$) fonction de la dérivée temporelle du signal en bande de base ($TX_{BB}$),
   - un soustracteur (SUB), relié au premier module de réduction ($B_{CC}$) et au deuxième module de réduction ($B_{ENV}$), et configuré pour soustraire du signal de réception ($RX_{IN}$) le premier signal de réduction ($SIG_{CC}$) et le deuxième signal de réduction ($SIG_{ENV}$).

2. Dispositif selon la revendication 1, ledit dispositif étant configuré pour fournir au deuxième module de réduction ($B_{ENV}$) une dérivée temporelle de la réplique du signal en bande de base ($TX_{BB}$) mélangée à la porteuse d'émission ($LO_{TX}$).

3. Dispositif selon l'une quelconque des revendications précédentes, ledit dispositif étant configuré pour appliquer un retard numérique à la réplique du signal en bande de base ($TX_{BB}$) avant que ladite réplique ne soit fournie au deuxième module de réduction ($B_{ENV}$).

4. Dispositif selon l'une quelconque des revendications précédentes, ledit premier module de réduction ($B_{CC}$) étant configuré pour appliquer un premier gain complexe ($G_{CC}^*$) à une réplique du signal d'émission ($TX_{OUT}$) en vue de fournir le premier signal de réduction ($SIG_{CC}$), le premier gain complexe ($G_{CC}^*$) étant déterminé de manière à générer une interférence destructive entre la contribution d'auto-interférence comprise dans le signal de réception ($RX_{IN}$) et le premier signal de réduction ($SIG_{CC}$)

5. Dispositif selon l'une quelconque des revendications 2 à 4, ledit deuxième module de réduction ($B_{ENV}$) étant configuré pour appliquer un deuxième gain complexe ($G_{ENV}^*$) à la dérivée temporelle de la réplique du signal en bande de base (TX$_{BB}$) mélangée à la porteuse d'émission (LO$_{TX}$), le deuxième gain complexe (G$_{ENV}$*) étant déterminé de manière à générer une interférence destructive entre d'une part un résidu (RES) de l'interférence destructive entre la contribution d'auto-interférence comprise dans le signal de réception (RX$_{IN}$) et le premier signal de réduction (SIG$_{CC}$), et d'autre part le deuxième signal de réduction (SIG$_{ENV}$).

**6.** Dispositif de communication, comprenant une pluralité de nœuds de communication (NOEUD_RF_IBFD_1, NOEUD_RF_IBFD_2, NOEUD_RF_IBFD_3, ..., NOEUD_RF_IBFD_N), au moins un des nœuds de communication (NOEUD_RF_IBFD_1, NOEUD_RF_IBFD_2, NOEUD_RF_IBFD_3, ..., NOEUD_RF_IBFD_N) étant équipé d'un dispositif de réduction d'au moins une contribution d'auto-interférence selon l'une des revendications précédentes, et d'un dispositif de réduction des interférences générées par les autres nœuds de communication (NOEUD_RF_IBFD_1, NOEUD_RF_IBFD_2, NOEUD_RF_IBFD_3, ..., NOEUD_RF_IBFD_N).

**7.** Procédé de réduction d'au moins une contribution d'auto-interférence dans un système de communication sans fil full-duplex, configuré pour transmettre un signal d'émission (TX$_{OUT}$) à une porteuse d'émission (LO$_{TX}$) et modulé par un signal en bande de base (TX$_{BB}$), et configuré pour recevoir un signal de réception (RX$_{IN}$) contenant au moins une contribution d'auto-interférence correspondant au signal d'émission (TX$_{OUT}$), ledit procédé de réduction comprenant au moins une première étape de réduction (E1), dans laquelle un premier module de réduction (B$_{CC}$) prélève une réplique du signal d'émission (TX$_{OUT}$) et génère un premier signal de réduction (SIG$_{CC}$), **caractérisé en ce qu'**il comprend en outre au moins les étapes suivantes :

- une deuxième étape de réduction (E2), dans laquelle un deuxième module de réduction (B$_{ENV}$) génère un deuxième signal de réduction (SIG$_{ENV}$) fonction de la dérivée temporelle de la réplique du signal en bande de base (TX$_{BB}$),
- une étape de soustraction (E3) dans laquelle on soustrait du signal de réception (RX$_{IN}$) le premier signal de réduction (SIG$_{CC}$) et le deuxième signal de réduction (SIG$_{ENV}$).

**8.** Procédé selon la revendication 7, une dérivée temporelle de ladite réplique du signal en bande de base (TX$_{BB}$) mélangée à la porteuse d'émission (LO$_{TX}$) étant fournie au deuxième module de réduction (B$_{ENV}$).

**9.** Procédé selon l'une quelconque des revendications 7 ou 8, un retard numérique étant appliqué à ladite réplique du signal en bande de base (TX$_{BB}$) avant que ladite réplique ne soit fournie au deuxième module de réduction (B$_{ENV}$).

**10.** Procédé selon l'une quelconque des revendications 7 à 9, ledit premier module de réduction (B$_{CC}$) appliquant un premier gain complexe (G$_{CC}$*) à une réplique du signal d'émission (TX$_{OUT}$) en vue de fournir le premier signal de réduction (SIG$_{CC}$), le premier gain complexe (G$_{CC}$*) étant déterminé de manière à générer une interférence destructive entre la contribution d'auto-interférence comprise dans le signal de réception (RX$_{IN}$) et le premier signal de réduction (SIG$_{CC}$).

**11.** Procédé selon l'une quelconque des revendications 8 à 10, ledit deuxième module de réduction (B$_{ENV}$) appliquant un deuxième gain complexe (G$_{ENV}$*) à la dérivée temporelle de la réplique du signal en bande de base (TX$_{BB}$) mélangée à la porteuse d'émission (LO$_{TX}$), le deuxième gain complexe (G$_{ENV}$*) étant déterminé de manière à générer une interférence destructive entre d'une part un résidu (RES) de l'interférence destructive entre la au moins contribution d'auto-interférence comprise dans le signal de réception (RX$_{IN}$) et le premier signal de réduction (SIG$_{CC}$), et d'autre part le deuxième signal de réduction (SIG$_{ENV}$).

**12.** Procédé selon la revendication 11, comprenant en outre une étape d'étalonnage (E0), ladite étape d'étalonnage (E0) comprenant les sous-étapes suivantes :

- Une première sous-étape (SE1) de détermination du premier gain complexe (G$_{CC}$*) du premier module de réduction (B$_{CC}$), qui minimise la différence entre la contribution d'auto-interférence comprise dans le signal de réception (RX$_{IN}$) et correspondant au signal d'émission (TX$_{OUT}$), et le premier signal de réduction (SIG$_{CC}$), dit signal de résidu (RES) ; puis
- Une deuxième sous-étape (SE2) de détermination du deuxième gain complexe (G$_{ENV}$*) du deuxième module de réduction (B$_{ENV}$) qui minimise la différence entre le signal de résidu (RES) et le deuxième signal de réduction (SIG$_{ENV}$).

**13.** Procédé selon la revendication précédente, comprenant en outre une sous-étape (SE3) de détermination du retard numérique minimisant la différence entre le signal de résidu (RES) et le deuxième signal de réduction (SIG$_{ENV}$).

**14.** Procédé selon la revendication 12, ladite sous-étape (SE2) de détermination du deuxième gain complexe ($G_{ENV}$*) comprenant en outre la détermination du retard numérique minimisant la différence entre le signal de résidu (RES) et le deuxième signal de réduction ($SIG_{ENV}$).

**15.** Procédé selon l'une quelconque des revendications 12 à 14, ladite étape d'étalonnage (E0) étant effectuée périodiquement ou en cas de changement de l'environnement du système de communication sans fil full-duplex.

**Patentansprüche**

**1.** Vorrichtung zum Reduzieren wenigstens eines Eigeninterferenzbeitrags in einem drahtlosen Vollduplex-Kommunikationssystem, konfiguriert zum Übertragen eines Sendesignals ($TX_{OUT}$) mit einem Sendeträger ($LO_{TX}$) und moduliert durch ein Basisbandsignal ($TX_{BB}$) und konfiguriert zum Empfangen eines Empfangssignals ($RX_{IN}$), das wenigstens einen Eigeninterferenzbeitrag entsprechend dem Sendesignal ($TX_{OUT}$) enthält, wobei die Reduktionsvorrichtung wenigstens ein erstes Reduktionsmodul ($B_{CC}$) umfasst, konfiguriert zum Nehmen eines Replikats des Sendesignals ($TX_{OUT}$) und konfiguriert zum Erzeugen eines ersten Reduktionssignals ($SIG_{CC}$), **dadurch gekennzeichnet, dass** sie ferner Folgendes umfasst:

- ein zweites Reduktionsmodul ($B_{ENV}$), so angeordnet, dass es ein Replikat des Basisbandsignals ($TX_{BB}$) nehmen kann, und das ein zweites Reduktionssignal ($SIG_{ENV}$) in Abhängigkeit vom zeitlichen Derivat des Basisbandsignals ($TX_{BB}$) erzeugen kann,
- einen Subtrahierer (SUB), verbunden mit dem ersten Reduktionsmodul ($B_{CC}$) und dem zweiten Reduktionsmodul ($B_{ENV}$) und konfiguriert zum Subtrahieren des ersten Reduktionssignals ($SIG_{CC}$) und des zweiten Reduktionssignals ($SIG_{ENV}$) von dem Empfangssignal ($RX_{IN}$).

**2.** Vorrichtung nach Anspruch 1, wobei die Vorrichtung zum Liefern eines zeitlichen Derivats des Replikats des Basisbandsignals ($TX_{BB}$) gemischt mit dem Sendeträger ($LO_{TX}$) zu dem zweiten Reduktionsmodul ($B_{ENV}$) konfiguriert ist.

**3.** Vorrichtung nach einem der vorherigen Ansprüche, wobei die Vorrichtung zum Anwenden einer digitalen Verzögerung auf das Replikat des Basisbandsignals ($TX_{BB}$) konfiguriert ist, bevor das Replikat zum zweiten Reduktionsmodul ($B_{ENV}$) geliefert wird.

**4.** Vorrichtung nach einem der vorherigen Ansprüche, wobei das erste Reduktionsmodul ($B_{CC}$) zum Anwenden einer ersten komplexen Verstärkung ($G_{CC}$*) auf ein Replikat des Sendesignals ($TX_{OUT}$) im Hinblick auf das Liefern des ersten Reduktionssignals ($SIG_{CC}$) konfiguriert ist, wobei die erste komplexe Verstärkung ($G_{CC}$*) so bestimmt wird, dass sie eine destruktive Interferenz zwischen dem im Empfangssignal ($RX_{IN}$) enthaltenen Eigeninterferenzbeitrag und dem ersten Reduktionssignal ($SIG_{CC}$) erzeugt.

**5.** Vorrichtung nach einem der Ansprüche 2 bis 4, wobei das zweite Reduktionsmodul ($B_{ENV}$) zum Anwenden einer zweiten komplexen Verstärkung ($G_{ENV}$*) auf das zeitliche Derivat des Replikats des Basisbandsignals ($TX_{BB}$) gemischt mit dem Sendeträger ($LO_{TX}$) konfiguriert ist, wobei die zweite komplexe Verstärkung ($G_{ENV}$*) so bestimmt wird, dass sie eine destruktive Interferenz zwischen einerseits einem Rest (RES) der destruktiven Interferenz zwischen dem im Empfangssignal ($RX_{IN}$) enthaltenen Eigeninterferenzbeitrag und dem ersten Reduktionssignal ($SIG_{CC}$) und andererseits dem zweiten Reduktionssignal ($SIG_{ENV}$) erzeugt.

**6.** Kommunikationsvorrichtung, die mehrere Kommunikationsknoten (NOEUD_RF_IBFD_1, NOEUD_RF_IBFD_2, NOEUD_RF_IBFD_3, ..., NOEUD_RF_IBFD_N) umfasst, wobei wenigstens einer der Kommunikationsknoten (NOEUD_RF_IBFD_1, NOEUD_RF_IBFD_2, NOEUD_RF_IBFD_3, ..., NOEUD_RF_IBFD_N) mit einer Vorrichtung zum Reduzieren von wenigstens einem Eigeninterferenzbeitrag nach einem der vorherigen Ansprüche und mit einer Vorrichtung zum Reduzieren von Interferenzen ausgestattet ist, die durch die anderen Kommunikationsknoten (NOEUD_RF_IBFD_1, NOEUD_RF_IBFD_2, NOEUD_RF_IBFD_3, ..., NOEUD_RF_IBFD_N) erzeugt werden.

**7.** Verfahren zum Reduzieren wenigstens eines Eigeninterferenzbeitrags in einem drahtlosen Vollduplex-Kommunikationssystem, konfiguriert zum Übertragen eines Sendesignals ($TX_{OUT}$) mit einem Sendeträger ($LO_{TX}$) und moduliert durch ein Basisbandsignal ($TX_{BB}$) und konfiguriert zum Empfangen eines Empfangssignals ($RX_{IN}$), das wenigstens einen Eigeninterferenzbeitrag entsprechend dem Sendesignal ($TX_{OUT}$) enthält, wobei das Reduktionsverfahren wenigstens einen ersten Reduktionsschritt (E1) beinhaltet, in dem ein erstes Reduktionsmodul ($B_{CC}$) ein Replikat des Sendesignals ($TX_{OUT}$) nimmt und ein erstes Reduktionssignal ($SIG_{CC}$) erzeugt, **dadurch gekennzeichnet, dass** es ferner wenigstens die folgenden Schritte beinhaltet:

- einen zweiten Reduktionsschritt (E2), in dem ein zweites Reduktionsmodul ($B_{ENV}$) ein zweites Reduktionssignal ($SIG_{ENV}$) in Abhängigkeit vom zeitlichen Derivat des Replikats des Basisbandsignals ($TX_{BB}$) erzeugt,
- einen Subtraktionsschritt (E3), in dem das erste Reduktionssignal ($SIG_{CC}$) und das zweite Reduktionssignal ($SIG_{ENV}$) vom Empfangssignal ($RX_{IN}$) subtrahiert werden.

8. Verfahren nach Anspruch 7, wobei ein zeitliches Derivat des Replikats des Basisbandsignals ($TX_{BB}$) gemischt mit dem Sendeträger ($LO_{TX}$) zum zweiten Reduktionsmodul ($B_{ENV}$) geliefert wird.

9. Verfahren nach Anspruch 7 oder 8, wobei eine digitale Verzögerung auf das Replikat des Basisbandsignals ($TX_{BB}$) angewendet wird, bevor das Replikat zum zweiten Reduktionsmodul ($B_{ENV}$) geliefert wird.

10. Verfahren nach einem der Ansprüche 7 bis 9, wobei das erste Reduktionsmodul ($B_{CC}$) eine erste komplexe Verstärkung ($G_{CC}*$) auf ein Replikat des Sendesignals ($TX_{OUT}$) im Hinblick darauf anwendet, das erste Reduktionssignal ($SIG_{CC}$) zu liefern, wobei die erste komplexe Verstärkung ($G_{CC}*$) so bestimmt wird, dass sie eine destruktive Interferenz zwischen dem im Empfangssignal ($RX_{IN}$) enthaltenen Eigeninterferenzbeitrag und dem ersten Reduktionssignal ($SIG_{CC}$) erzeugt.

11. Verfahren nach einem der Ansprüche 8 bis 10, wobei das zweite Reduktionsmodul ($B_{ENV}$) eine zweite komplexe Verstärkung ($G_{ENV}*$) auf das zeitliche Derivat des Replikats des Basisbandsignals ($TX_{BB}$) gemischt mit dem Sendeträger ($LO_{TX}$) anwendet, wobei die zweite komplexe Verstärkung ($G_{ENV}*$) so bestimmt wird, dass sie eine destruktive Interferenz zwischen einerseits einem Rest (RES) der destruktiven Interferenz zwischen dem in dem Empfangssignal ($RX_{IN}$) und dem ersten Reduktionssignal ($SIG_{CC}$) enthaltenen Eigeninterferenzbeitrag und andererseits dem zweiten Reduktionssignal ($SIG_{ENV}$) erzeugt.

12. Verfahren nach Anspruch 11, das ferner einen Abtastschritt (E0) beinhaltet, wobei der Abtastschritt (E0) die folgenden Unterschritte beinhaltet:

- einen ersten Unterschritt (SE1) des Bestimmens der ersten komplexen Verstärkung ($G_{CC}*$) des ersten Reduktionsmoduls ($B_{CC}$), die die Differenz zwischen dem in dem Empfangssignal ($RX_{IN}$) enthaltenen Eigeninterferenzbeitrag entsprechend dem Sendesignal ($TX_{OUT}$) und dem ersten Reduktionssignal ($SIG_{CC}$), Restsignal (RES) genannt, minimiert, dann
- einen zweiten Unterschritt (SE2) des Bestimmens der zweiten komplexen Verstärkung ($G_{ENV}*$) des zweiten Reduktionsmoduls ($B_{ENV}$), die die Differenz zwischen dem Restsignal (RES) und dem zweiten Reduktionssignal ($SIG_{ENV}$) minimiert.

13. Verfahren nach dem vorherigen Anspruch, das ferner einen Unterschritt (SE3) des Bestimmens der digitalen Verzögerung beinhaltet, die die Differenz zwischen dem Restsignal (RES) und dem zweiten Reduktionssignal ($SIG_{ENV}$) minimiert.

14. Verfahren nach Anspruch 12, wobei der Unterschritt (SE2) des Bestimmens der zweiten komplexen Verstärkung ($G_{ENV}*$) ferner das Bestimmen der digitalen Verzögerung umfasst, die die Differenz zwischen dem Restsignal (RES) und dem zweiten Reduktionssignal ($SIG_{ENV}$) umfasst.

15. Verfahren nach einem der Ansprüche 12 bis 14, wobei der Abtastschritt (E0) periodisch oder im Falle einer Änderung der Umgebung des drahtlosen Vollduplex-Kommunikationssystems durchgeführt wird.

**Claims**

1. Device for reducing at least one self-interference contribution in a full-duplex wireless communication system configured to transmit a transmission signal ($TX_{OUT}$) with a transmission carrier ($LO_{TX}$) and modulated by a baseband signal ($TX_{BB}$), and configured to receive a reception signal ($RX_{IN}$) containing at least one self-interference contribution corresponding to the transmission signal ($TX_{OUT}$), said reduction device comprising at least one first reduction module ($B_{CC}$), configured to take a replica of the transmission signal ($TX_{OUT}$), and configured to generate a first reduction signal ($SIG_{CC}$),
**characterized in that** it further comprises:

- a second reduction module ($B_{ENV}$), arranged so as to be able to take a replica of the baseband signal ($TX_{BB}$), and capable of generating a second reduction signal ($SIG_{ENV}$) that is a function of the temporal derivative of the baseband signal ($TX_{BB}$),
- a subtractor (SUB), linked to the first reduction module ($B_{CC}$) and to the second reduction module ($B_{ENV}$), and configured to subtract from the reception signal ($RX_{IN}$) the first reduction signal ($SIG_{CC}$) and the second reduction signal ($SIG_{ENV}$).

2.  Device according to Claim 1, said device being configured to supply the second reduction module ($B_{ENV}$) with a temporal derivative of the replica of the baseband signal ($TX_{BB}$) mixed with the transmission carrier ($LO_{TX}$).

3.  Device according to either one of the preceding claims, said device being configured to apply a digital delay to the replica of the baseband signal ($TX_{BB}$) before said replica is supplied to the second reduction module ($B_{ENV}$).

4.  Device according to any one of the preceding claims, said first reduction module ($B_{CC}$) being configured to apply a first complex gain ($G_{CC}{}^{*}$) to a replica of the transmission signal ($TX_{OUT}$) in order to supply the first reduction signal ($SIG_{CC}$), the first complex gain ($G_{CC}{}^{*}$) being determined so as to generate a destructive interference between the self-interference contribution included in the reception signal ($RX_{IN}$) and the first reduction signal ($SIG_{CC}$).

5.  Device according to any one of claims 2 to 4, said second reduction module ($B_{ENV}$) being configured to apply a second complex gain ($G_{ENV}{}^{*}$) to the temporal derivative of the replica of the baseband signal ($TX_{BB}$) mixed with the transmission carrier ($LO_{TX}$), the second complex gain ($G_{ENV}{}^{*}$) being determined so as to generate a destructive interference between, on the one hand, a residue (RES) of the destructive interference between the self-interference contribution included in the reception signal ($RX_{IN}$) and the first reduction signal ($SIG_{CC}$), and, on the other hand, the second reduction signal ($SIG_{ENV}$).

6.  Communication device, comprising a plurality of communication nodes (NODE_RF_IBFD_1, NODE_RF_IBFD_2, NODE_RF_IBFD_3, ..., NODE_RF_IBFD_N), at least one of the communication nodes (NODE_RF_IBFD_1, NODE_RF_IBFD_2, NODE_RF_IBFD_3, ..., NODE_RF_IBFD_N) being equipped with a device for reducing at least one self-interference contribution according to one of the preceding claims, and a device for reducing interferences generated by the other communication nodes (NODE_RF_IBFD_1, NODE_RF_IBFD_2, NODE_RF_IBFD_3, ..., NODE_RF_IBFD_N).

7.  Method for reducing at least one self-interference contribution in a full-duplex wireless communication system, configured to transmit a transmission signal ($TX_{OUT}$) with a transmission carrier ($LO_{TX}$) and modulated by a baseband signal ($TX_{BB}$), and configured to receive a reception signal ($RX_{IN}$) containing at least one self-interference contribution corresponding to the transmission signal ($TX_{OUT}$), said reduction method comprising at least one first reduction step (E1), in which a first reduction module ($B_{CC}$) takes a replica of the transmission signal ($TX_{OUT}$) and generates a first reduction signal ($SIG_{CC}$),
**characterized in that** it further comprises at least the following steps:

- a second reduction step (E2), in which a second reduction module ($B_{ENV}$) generates a second reduction signal ($SIG_{ENV}$) that is a function of the temporal derivative of the replica of the baseband signal ($TX_{BB}$),
- a subtraction step (E3) in which the first reduction signal ($SIG_{CC}$) and the second reduction signal ($SIG_{ENV}$) are subtracted from the reception signal ($RX_{IN}$).

8.  Method according to claim 7, a temporal derivative of said replica of the baseband signal ($TX_{BB}$) mixed with the transmission carrier ($LO_{TX}$) being supplied to the second reduction module ($B_{ENV}$).

9.  Method according to either one of claims 7 or 8, a digital delay being applied to said replica of the baseband signal ($TX_{BB}$) before said replica is supplied to the second reduction module ($B_{ENV}$).

10. Method according to any one of claims 7 to 9, said first reduction module ($B_{CC}$) applying a first complex gain ($G_{CC}{}^{*}$) to a replica of the transmission signal ($TX_{OUT}$) in order to supply the first reduction signal ($SIG_{CC}$), the first complex gain ($G_{CC}{}^{*}$) being determined so as to generate a destructive interference between the self-interference contribution included in the reception signal ($RX_{IN}$) and the first reduction signal ($SIG_{CC}$).

**11.** Method according to any one of claims 8 to 10, said second reduction module ($B_{ENV}$) applying a second complex gain ($G_{ENV}*$) to the temporal derivative of the replica of the baseband signal ($TX_{BB}$) mixed with the transmission carrier ($LO_{TX}$), the second complex gain ($G_{ENV}*$) being determined so as to generate a destructive interference between, on the one hand, a residue (RES) of the destructive interference between the at least one self-interference contribution included in the reception signal ($RX_{IN}$) and the first reduction signal ($SIG_{CC}$), and, on the other hand, the second reduction signal ($SIG_{ENV}$).

**12.** Method according to claim 11, further comprising a calibration step (E0), said calibration step (E0) comprising the following substeps:

- a first substep (SE1) of determination of the first complex gain ($G_{CC}*$) of the first reduction module ($B_{CC}$), which minimizes the difference between the self-interference contribution included in the reception signal ($RX_{IN}$) and corresponding to the transmission signal ($TX_{OUT}$), and the first reduction signal ($SIG_{CC}$), called residue signal (RES); then
- a second substep (SE2) of determination of the second complex gain ($G_{ENV}*$) of the second reduction module ($B_{ENV}$) which minimizes the difference between the residue signal (RES) and the second reduction signal ($SIG_{ENV}$).

**13.** Method according to the preceding claim, further comprising a substep (SE3) of determination of the digital delay minimizing the difference between the residue signal (RES) and the second reduction signal ($SIG_{ENV}$).

**14.** Method according to claim 12, said substep (SE2) of determination of the second complex gain ($G_{ENV}*$) further comprising the determination of the digital delay minimizing the difference between the residue signal (RES) and the second reduction signal ($SIG_{ENV}$).

**15.** Method according to any one of claims 12 to 14, said calibration step (E0) being performed periodically or in case of a change of the environment of the full-duplex wireless communication system.

FIG 1A

FIG 1B

FIG 2A

FIG 2B

FIG 3

FIG.4

FIG 5

## RÉFÉRENCES CITÉES DANS LA DESCRIPTION

**Documents brevets cités dans la description**

- US 20130301488 A
- US 2015318976 A

- EP 3151495 A

**Littérature non-brevet citée dans la description**

- Full Duplex Radios. McMilin
- **KATTI.** *ACM SIGCOMM'13,* Août 2013, http://www.stanford.edu ?skatti/pubs sigcomm13-fullduplex.pdf

- **ZHANG et al.** A 1.7-to-2.2 GHz Full-Duplex Transceiver System with >50 dB Self-Interference Cancellation over 42 MHz Bandwidth. *ISSC,* 2017